# EUROPÄISCHE PATENTANMELDUNG

(11) **EP 0 856 496 A1**
(43) Veröffentlichungstag der Anmeldung: **05.08.1998**
(21) Anmeldenummer: 97121634.6
(22) Anmeldetag: 09.12.1997
(51) Int. Cl.: C04B 28/18, C04B 38/08, C04B 40/02

(54) **Kalksandstein mit Leichtzuschlag**

(30) Priorität: 01.02.1997 DE 19703777
(71) Anmelder: Lias-Franken Leichtbaustoffe GmbH & Co. KG, 91352 Hallerndorf (DE)
(72) Erfinder: Henneck, Paul, Dipl.-Ing., 91301 Forchheim (DE); Mackedanz, Jochen, Dipl.-Ing., 91330 Eggolsheim (DE); Schaller, Matthias, Dipl.-Ing., 90455 Nürnberg (DE)
(74) Vertreter: Böhme, Volker, Dipl.-Ing.

(57) **Zusammenfassung**

Es gibt einen Kalksandstein, bei dem der Leichtzuschlag einerseits Sand-Leichtzuschlag (≤ 4 mm) und andererseits Grob-Leichtzuschlag (> 4 mm) ist und der Sand-Leichtzuschlag Blähton umfaßt und der Grob-Leichtzuschlag Blähton ist. Dabei ist es erwünscht, wenn der Kalksandstein eine verbesserte Wärmedämmung aufweist. Dies ist erreicht, indem der Kalksandstein aus dem Kalk und dem Leichtzuschlag, d.h. ohne Quarzsand hergestellt ist, wobei der Kalk mit 2 - 10 FRL% und der Leichtzuschlag mit 65 - 80 FRL% vorgesehen ist, und indem von 100 FRL Leichtzuschlag 30 - 60 FRL% Sand-Leichtzuschlag (≤ 4 mm) und 70 - 40 FRL% Grob-Leichtzuschlag (> 4 mm) sind, wobei der Sand-Leichtzuschlag Blähton oder Blähton/ Blähglas ist. Bei diesem Kalksandstein weist das Steinmaterial selbst, also z.B. auch ein Vollstein im Mauerwerk eine Wärmeleitzahl von höchstens 0,2 W/m.K oder weniger auf, d.h. die Wärmedämmung ist erheblich verbessert.

## Beschreibung

Die Erfindung betrifft einen Kalksandstein mit Leichtzuschlag, hergestellt aus Kalk und kieselsäurehaltigem Leichtzuschlag zweier Körnungstypen, die zusammen mit Luft bezogen auf Festraumliter (FRL) 100 sind, gemäß Oberbegriff des Patentanspruchs 1.

Bei einem bekannten (CH-A-379 998) Kalksandstein dieser Art ist außer dem Kalk und dem Leichtzuschlag auch noch Quarzsand vorgesehen. Der Grob-Leichtzuschlag ist in relativ geringer Menge, d.h. unter 30 Vol.% vorgesehen und auch der Sand-Leichtzuschlag ist in relativ geringer Menge, d.h. unter 30 Vol.% vorgesehen. Alles dies läßt darauf schließen, daß bei dem bekannten Kalksandstein die Rohdichte relativ groß ist und folglich die Wärmedämmung klein ist.

Bei einem weiteren bekannten (DE-AS 28 05 153) Kalksandstein ist bei einer Scherben-Rohdichte von 1,24 der Kalk bei einer angenommenen Rohdichte von 2,1 mit 3 - 9 FRL% (5 - 15 Gew.%) und der Leichtzuschlag bei einer angenommenen Rohdichte von 1 mit 80 - 98 FRL% (85 - 95 Gew.%) vorgesehen. Der Leichtzuschlag ist insgesamt ein Bims-Sand-Leichtzuschlag, der insgesamt mit einer Feinkörnung < 0,2 mm und teilweise mit einer Feinstkörnung < 0,1 mm vorliegt. Der Kalksandstein ist ein Lochstein mit einem Lochvolumenanteil 35 - 60 %. Der Kalksandstein hat im Mauerwerk, also unter Berücksichtigung der Löcher, eine Wärmeleitzahl von 0,23 W/m.K oder mehr. Die Wärmeleitzahl des Steinmaterials selbst ist wegen der fehlenden Löcher also stets merklich größer als 0,23 W/m.K. Diese Wärmedämmung ist unzureichend.

Eine Aufgabe der Erfindung ist es daher, einen Kalksandstein der eingangs genannten Art zu schaffen, dessen Wärmedämmung verbessert ist. Der erfindungsgemäße Kalksandstein ist, diese Aufgabe lösend, dadurch gekennzeichnet, daß der Kalksandstein aus dem Kalk und dem Leichtzuschlag, d.h. ohne Quarzsand hergestellt ist, wobei der Kalk mit 4 - 10 FRL% und der Leichtzuschlag mit 65 - 80 FRL% vorgesehen ist, und daß von 100 FRL Leichtzuschlag 30 - 60 FRL% Sand-Leichtzuschlag (≤ 4 mm) und 70 - 40 FRL Grob-Leichtzuschlag (> 4 mm) sind, wobei der Sand-Leichtzuschlag Blähton oder Blähton/Blähglas ist.

Bei dem erfindungsgemäßen Kalksandstein weist das Steinmaterial selbst, also z.B. auch ein Vollstein im Mauerwerk eine Wärmeleitzahl von höchstens 0,2 W/m.K oder weniger auf, d.h. die Wärmedämmung ist erheblich verbessert. Der Leichtzuschlag ist in solchen in Sandform und solchen in Grobform untergliedert. Der Leichtzuschlag ist im wesentlichen von Blähton gebildet, wobei ein Teil des Sands auch von Blähglas gebildet sein kann. Beim Blähton ist der kristalline Restanteil geringer als bei Bims und beim Pressen während des Herstellens wird Blähton, im Unterschied zu Bims, nicht verdichtet. Blähton bindet besser ab als Bims, d.h. hat eine bindungsfreudigere Oberfläche. Der beim Mauerwerk angestrebte K-Wert < 0,5 läßt sich mit dem erfindungsgemäßen Kalksandstein leicht erreichen.

Die für den erfindungsgemäßen Kalksandstein gemachten Mengenangaben betreffen an sich die Mischung, aus der der Kalksandstein hergestellt wird, lassen sich aber auch durch nachträgliche Analyse des fertigen Kalksandsteins feststellen. Die beim erfindungsgemäßen Kalksandstein vorliegenden Ca-Si-Verbindungen zwischen Kalk und Blähton sind im wesentlichen die gleichen wie die zwischen Kalk und Quarzsand bei einem herkömmlichen Kalksandstein mit Quarzsand-Zuschlag. Der erfindungsgemäße Kalksandstein wird in herkömmlicher Weise hergestellt, indem die mit Wasser vermischte Masse von Bestandteilen in einer Formpresse mit Preßdrücken bis zu 25 N/mm² zu einem Rohling gepreßt wird und der Rohling in einem Spezialofen, d.h. in einem Autoklaven unter Sattdampfdruck von z.B. 16 bar bei Temperaturen von 160 - 220°C während ca. 4 - 8 Std. gehärtet wird.

Besonders zweckmäßig und vorteilhaft ist es, wenn der Kalk mit 4 - 8 FRL% und der Leichtzuschlag mit 65 - 70 FRL% vorgesehen ist und/oder wenn von 100 FRL Leichtzuschlag 30 - 50 FRL% Sand-Leichtzuschlag (≤ 4 mm) und 70 - 35 FRL% Grob-Leichtzuschlag (> 4 mm) sind. Diese Verhältnisse sind in der Praxis bevorzugt brauchbar, weil dabei die Verhältnisse bzgl. Rohdichte, Druckfestigkeit und Wärmeleitzahl im Sinne der Erfindung günstiger liegen.

Die Materialdichte, d.h. die Dichte des Steinmaterials selbst ist beim erfindungsgemäßen Kalksandstein in der Regel < 0,9 kg/dm³. Besonders zweckmäßig und vorteilhaft ist es, wenn die Körnung des Sand-Leichtzuschlags < 1 mm ist. Hierdurch wird die Materialdich

te weiter verbessert. Besonders zweckmäßig und vorteilhaft ist es noch, wenn der Sand-Leichtzuschlag neben dem Blähton das Blähglas mit bis zu 50 FRL% aufweist. Diese Begrenzung des Sand-Blähglas-Anteils erleichtert es, die hinsichtlich Wärmedämmung und Materialdichte erwünschten Werte einzustellen; die Druckfestigkeit des Kalksandsteins wird bei einem Sand-Leichtzuschlag-Anteil von mehr als 50 % Blähglas schlechter.

Besonders zweckmäßig und vorteilhaft ist es sodann, wenn die Körnung des Grob-Leichtzuschlags maximal 10 mm, vorzugsweise maximal 8 mm ist. Bei dieser Körnungsobergrenze lassen sich einige Anforderungen, die an den Kalksandstein gestellt werden, leichter einstellen, insbesondere wird ein Rückgang der Festigkeit vermieden. Gröberer Leichtzuschlag führt zu Schwierigkeit bei den Stegen von Lochsteinen.

Die Kornfestigkeit von Bims ist < 10 kN und die Kornfestigkeit voll Blähton ist > 10 kN und wird für den erfindungsgemäßen Kalksandstein mit 10 - 140 kN, vorzugsweise 11 - 25 kN gewählt. Aufgrund der höheren Kornfestigkeit wird bei besserer Festigkeit des Kalksandsteins ein leichterer Stein erreicht.

Während Bims voll offenporig ist und mindestens 20 Gew.% Wasser aufnimmt, ist Blähton mehr oder weniger geschlossen und hat eine Wasseraufnahmefähigkeit von maximal 12 Gew.%. In der Regel wird für einen erfindungsgemäßen Kalksandstein ein Blähton von 7 - 9 Gew.% Wasseraufnahmefähigkeit verwendet, weil bei kleineren Werten die Wärmedämmung schlechter wird und bei größeren Werten die Druckfestigkeit sinkt.

Für den erfindungsgemäßen Kalksandstein wird die Rohdichte der Leichtzuschlag-Teilchen angegeben. Bei dem Grob-Leichtzuschlag hat der Blähton eine Rohdichte von 0,55 - 1,55 kg/dm³, insbesondere von 0,55 - 0,80 kg/dm³. Je kleiner die Rohdichte des Grobzuschlags desto besser die Wärmeleitzahl; mit größerer Rohdichte steigt zwar die Druckfestigkeit, verschlechtert sich aber die Wärmeleitzahl. Bei dem Sand-Leichtzuschlag hat der Blähton eine Rohdichte von 1 - 2,2 kg/dm³, insbesondere von 1,7 - 2,2 kg/dm³ und das Blähglas eine Rohdichte von 0,25 - 0,50 kg/dm³, insbesondere von 0,3 - 0,4 kg/dm³. Diese Rohdichten des Blähtonsandes ergeben besondere Reaktivität und verbesserte Druckfestigkeiten; diese Rohdichten des Blähglassandes ergeben verbesserte Wärmedämmverhältnisse.

Bei dem erfindungsgemäßen Kalksandstein handelt es sich um einen hydrothermalgehärteten Stein und der Leichtzuschlag ist überwiegend amorph. Der Kalksandstein dient dem Mauerwerksbau und die durch die Wärmeleitzahl gemessene Wärmedämmung ist wichtig. Der Kalksandstein kann als Vollstein oder Lochstein ausgebildet sein. Der Kalksandstein hat in der Regel die Abmessungen üblicher Blöcke, kann jedoch auch ein Extremformat aufweisen, z.B. 1 m lang und 0,5 m hoch sein. Bei dem erfindungsgemäßen Kalksandstein liegen die Teilchen des Blähtons in Kugelform, in Pelletform oder in anderer Form vor. Bei der Herstellung halten sich das Mischungsverhältnis Wasser : Trockensubstanz und die übrigen Herstellungsmaßnahmen im Rahmen des üblichen. Mit Kalk ist hier gebrannter Kalk (CaO) gemeint. Unter Blähton ist stets auch Blähschiefer zu verstehen.

## Patentansprüche

1. Kalksandstein mit Leichtzuschlag,
der Kalk und kieselsäurehaltigen Leichtzuschlag zweier Körnungstypen, die zusammen mit Luft bezogen auf Festraumliter (FRL) 100 sind, aufweist,
bei dem der Leichtzuschlag einerseits Sand-Leichtzuschlag (≤ 4 mm) und andererseits Grob-Leichtzuschlag (> 4 mm) ist und
bei dem der Sand-Leichtzuschlag Blähton umfaßt und der Grob-Leichtzuschlag Blähton ist,
dadurch gekennzeichnet,
daß der Kalksandstein aus dem Kalk und dem Leichtzuschlag, d.h. ohne Quarzsand hergestellt ist,
wobei der Kalk mit 2 - 10 FRL% und der Leichtzuschlag mit 65 - 80 FRL% vorgesehen ist, und
daß von 100 FRL Leichtzuschlag 30 - 60 FRL% Sand-Leichtzuschlag (≤ 4 mm) und 70 - 40 FRL% Grob-Leichtzuschlag (> 4 mm) sind,
wobei der Sand-Leichtzuschlag Blähton oder Blähton/Blähglas ist.

2. Kalksandstein nach Anspruch 1, dadurch gekennzeichnet, daß der Kalk mit 4 - 8 FRL% und der Leichtzuschlag mit 65 - 70 FRL% vorgesehen ist.

3. Kalksandstein nach Anspruch 1 oder 2, dadurch gekennzeichnet, daß von 100 FRL Leichtzuschlag 30 - 50 FRL% Sand-Leichtzuschlag (≤ 4 mm) und 70 - 35 FRL% Grob-Leichtzuschlag (> 4 mm) sind.

4. Kalksandstein nach Anspruch 1, 2 oder 3, dadurch gekennzeichnet, daß die Körnung des Sand-Leichtzuschlags < 1 mm ist.

5. Kalksandstein nach einem der vorhergehenden Ansprüche, dadurch gekennzeichnet, daß der Sand-Leichtzuschlag neben dem Blähton das Blähglas mit bis zu 50 FRL% aufweist.

6. Kalksandstein nach einem der vorhergehenden Ansprüche, dadurch gekennzeichnet, daß die Körnung des Grob-Leichtzuschlags maximal 10 mm, vorzugsweise maximal 8 mm ist.
